# EUROPEAN PATENT SPECIFICATION

(11) **EP 3 478 734 B1**
(45) Date of publication and mention of the grant of the patent: **31.03.2021**
(21) Application number: 17731178.4
(22) Date of filing: 23.06.2017
(51) Int. Cl.: C08F 212/08, C08F 2/28, C08F 220/18, D21H 17/37, D21H 17/35, D21H 17/45, D21H 21/16

(54) **FINELY DIVIDED, CATIONIC, AQUEOUS POLYMER DISPERSIONS, METHOD FOR THE PRODUCTION THEREOF, AND USE THEREOF**
FEIN ZERTEILTE, KATIONISCHE, WÄSSRIGE POLYMERDISPERSIONEN, VERFAHREN ZUR HERSTELLUNG DAVON UND VERWENDUNG DAVON
DISPERSIONS AQUEUSES, CATIONIQUES, FINEMENT DIVISÉES DE POLYMÈRES, PROCÉDÉ POUR LEUR PRODUCTION, ET LEUR UTILISATION

(30) Priority: 30.06.2016 EP 16177174
(43) Date of publication of application: 08.05.2019
(73) Proprietor: Solenis Technologies Cayman, L.P., KY1-1104, Cayman (KY)
(72) Inventor: CIMPEANU, Carmen-Elena, 67056 Ludwigshafen (DE); ARNOLD, Petra, 67056 Ludwigshafen (DE); MILLARD, Pierre-Eric, 67056 Ludwigshafen (DE)
(74) Representative: LKGlobal UK Ltd.
(86) International application number: PCT/EP2017/065519
(87) International publication number: WO 2018/001885

(56) References cited:
- WO-A1-2010/139683
- CN-A- 101 871 184
- DE-A1- 3 039 976
- US-A1- 2008 039 598
- US-A1- 2010 022 701

## Description

The invention relates to finely divided, cationic, aqueous polymer dispersions which are obtainable by a two-stage polymerization, a cationic prepolymer being prepared as a dispersant in the first polymerization stage and thereafter an emulsion polymerization being carried out in an aqueous solution of this prepolymer in the presence of ethylenically unsaturated monomers, a process for their preparation and their use as sizes for paper, board and cardboard.

DE 24 52 585 A1 discloses aqueous copolymer dispersions which are obtainable by a two-stage polymerization in the aqueous phase, first a copolymer of a monomer containing acid groups and an ethylenically unsaturated monomer having a tertiary or quaternary amino group or a heterocyclic group comprising nitrogen being prepared by copolymerization in the aqueous phase and then, with further copolymerization, styrene and/or acrylonitrile and optionally (meth)acrylate and optionally further olefinically unsaturated monomers being added and polymerization being completed. The polymer dispersions thus prepared are used as sizes for paper.

DE 24 54 397 A1 discloses cationic aqueous copolymer dispersions which are prepared by emulsion copolymerization of olefinically unsaturated monomers in the presence of cationic polymeric dispersants/protective colloids. For this purpose, a prepolymer is synthesized by solution polymerization of hydrophobic ethylenically unsaturated monomers with monomers which comprise quaternary or ternary nitrogens, in water-miscible solvents, preferably alcohols or acetone. After addition of water and formic acid in order to protonate tertiary amino groups, hydrophobic monomers, such as styrene, acrylonitrile, (meth)acrylates and/or butadiene are then copolymerized, optionally with up to 10% by weight of α,β-monoolefinically unsaturated carboxylic acids, in the aqueous solution of the prepolymer by an emulsion polymerization method. The monomers are chosen so that the glass transition temperature of the copolymer is from -15 to +60°C. The dispersions thus obtainable are used as coating materials for paper, leather or sheet-like textile structures and as sizes for paper.

EP 0 051 144 A1 describes amphoteric, finely divided, aqueous polymer dispersions which are prepared by a two-stage polymerization. In the first stage of the preparation, a low molecular weight prepolymer is synthesized in a solution copolymerization in a water-miscible solvent, the monomer mixture used comprising from 0.5 mol to 1.5 mol of an ethylenically unsaturated carboxylic acid in addition to further monomers, in each case per mole of nitrogen-containing monomer which carries an amino group and/or a quaternary amino group. The prepolymer is then dispersed in water and reacted in an emulsion polymerization with nonionic, ethylenically unsaturated monomers with the use of customary water-soluble initiators. The dispersions obtained are used as engine sizes and surface sizes for paper.

EP 0 058 313 A1 discloses cationic paper sizes which are obtainable by first preparing a water-soluble cationic terpolymer consisting of N,N-dimethylaminoethyl acrylate and/or methacrylate, styrene and acrylonitrile by solution polymerization in an alcohol. After a subsequent quarterni-zation reaction, at least 10% of the N,N-dimethylamino groups present should be present in quaternized form and the remainder in protonated form. This terpolymer is used as an emulsifier in the subsequent free radical emulsion polymerization of a monomer mixture of acrylonitrile/methacrylonitrile and (meth)acrylates.

US 4,659,431 describes a cationic paper size which is likewise prepared by a two-stage process. First, a terpolymer is prepared by polymerizing a monomer mixture consisting of N,N-dimethylaminoethyl acrylate and/or methacrylate, styrene and acrylonitrile by a solution polymerization method in an alcohol. Subsequently, at least 10% of the N,N-dimethylamino groups are quaternized while the remainder are present in protonated form. The terpolymer is used as an emulsifier in the free radical emulsion polymerization of a monomer mixture which comprises up to 90% by weight of acrylonitrile and/or methacrylonitrile, from 5 to 95% by weight of styrene and from 5 to 95% by weight of (meth)acrylates.

EP 1 180 527 A1 discloses cationic, finely divided, aqueous polymer dispersions which are used as engine sizes and surface sizes for paper. The preparation of the dispersion is likewise effected in a two-stage process in which first, in a saturated C₁- to C₆-carboxylic acid, a solution polymer is synthesized which is then used in an emulsion polymerization of an optionally substituted styrene and of a (meth)acrylate. The emulsion polymerization is carried out with the use of customary, water-soluble initiators, e.g. peroxides, together with redox systems.

WO 05/121195 A1 discloses further finely divided, amphoteric, aqueous polymer dispersions which are suitable as sizes for paper, board and cardboard. These dispersions are likewise prepared in a two-stage process. First, a prepolymer is prepared from a (meth)acrylate and/or (meth)acrylamide having a free, protonated and/or quaternized amino group, an optionally substituted styrene optionally acrylonitrile and/or methacrylonitrile, an ethylenically unsaturated monomer comprising acid groups and, optionally a nonionic ethylenically unsaturated monomer differing therefrom. An aqueous solution of the prepolymer thus obtained is then subjected to an emulsion polymerization with at least one nonionic ethylenically unsaturated monomer. This at least one ethylenically unsaturated monomer may be an optionally substituted styrene, a C₁- to C₁₈-(meth)acrylate and optionally nonionic, ethylenically unsaturated monomers differing therefrom.

WO 08/071690 A1 describes a further finely divided, cationic polymer dispersion which is likewise used as a size for paper, board and cardboard. In the two-stage process, first a prepolymer is prepared from a (meth)acrylate, an optionally substituted styrene, optionally acrylonitrile or (meth)acrylonitrile, an ethylenically unsaturated carboxylic acid or carboxylic anhydride and optionally an ethylenically unsaturated monomer differing therefrom. An aqueous solution of the prepolymer is then reacted in an emulsion polymerization with acrylonitrile and/or methacrylonitrile, a C₁- to C₄-acrylate or methacrylate, a C₆- to C₁₄-acrylate or methacrylate and optionally nonionic monomers differing therefrom.

WO 2010/139683 describes cationic polymer dispersions obtained by first carrying out a solution polymerisation of a first monomer mixture containing (a) 15-40% by weight of a mixture of (a1) a (meth) acrylate and (a2) a (meth) acrylamide, in which (a1) and (a2) carrying an amino group or quaternary ammonium group, (b) 40-85% by weight of styrene, (c) 0.5-5% by weight of an ethylenically unsaturated monomer carrying an acid group, and (d) 0-20% by weight of a non-ionic ethylenically unsaturated monomer differing from (b) in a water miscible solvent. Water is added to the so formed solution polymer and then a second monomer mixture is polymerised in the presence of the aqueous solution of polymer by emulsion polymerisation. The second monomer mixture contains (i) is 0-29% by weight of styrene, (ii) 50-100% by weight of a C₁ to C₁₈- (meth) acrylate, (iii) 0-30% by weight of a vinyl ester of a C₁ to C₃₀- carboxylic acid and (iv) 0-30% by weight of a non-ionic ethylenically unsaturated monomer differing from (i), (ii), and (iii), wherein at least one of the solution and emulsion polymerisation stages are performed in the presence of 0-10% by weight of a polymerisation regulator.

It is known that in general cationic dispersions containing amine monomer components that are protonated to generate the cationic charge can lose their cationic charge as the pH is raised. The stability of the cationic charge may also depend on the particular amine monomer chosen. For instance, amine containing acrylate ester monomer components tend to be more prone to losing the cationic charge as the pH is raised to neutral and above. It is known thatacrylamide containing amine monomer components, especially the methacrylamide compounds, retain pH stability somewhat better than the corresponding acrylate esters. However, cationic polymer dispersions in which the cationic component is entirely the acrylamide or methacrylamide amino alkyl derivatives tended to provide only moderate sizing performance.

An objective of the present invention is to provide an alternative cationic polymer dispersion suitable for sizing of paper, board and cardboard. A further objective of the present invention is to provide such a cationic polymer dispersion which exhibits a good balance of good sizing properties and improve stability of the cationic charge.

US 2010/022701 A1 discloses finely divided, cationic polymer dispersions obtainable by emulsion polymerization of ethylenically unsaturated monomers in an aqueous solution of a cationic prepolymer as a dispersant, wherein a cationic prepolymer is first prepared by polymerization of (a) from 10 to 45% by weight of at least one (meth)acrylate which has an amino group and/or a quaternary ammonium group, and/or one (meth)acrylamide which carries an amino group and/or a quaternary ammonium group, (b) from 40 to 85% by weight of at least one optionally substituted styrene, (c) from 0 to 20% by weight of acrylonitrile or methacrylonitrile, (d) from 1 to 15% by weight of at least one ethylenically unsaturated carboxylic acid or one ethylenically unsaturated carboxylic anhydride and (e) from 0 to 20% by weight of at least one nonionic, ethylenically unsaturated monomer differing from the monomers (b) and (c), the sum of (a)+(b)+(c)+(d)+(e) being 100% by weight, in a solution polymerization in a water-miscible organic solvent, and the solution of prepolymer thus prepared is diluted with water, and wherein an emulsion polymerization of a monomer mixture comprising (i) from 30 to 80% by weight of acrylonitrile and/or methacrylonitrile, (ii) from 5 to 50% by weight of at least one C₁- to C₄-alkyl acrylate or at least one C₁- to C₄-alkyl methacrylate, (iii) from 5 to 50% by weight of at least one C₆- to C₁₄-alkyl acrylate or at least one C₆- to C₁₄-alkyl methacrylate and (iv) from 0 to 20% by weight of a nonionic monomer differing from the monomers (i), (ii) and (iii), the sum (i)+(ii)+(iii)+(iv) being 100% by weight, is then carried out in the aqueous solution of the prepolymer in the presence of water-soluble polymerization initiators.

According to the present invention we provide a finely divided, cationic, aqueous polymer dispersion having a mean particle size of from 5 to 250 nm which is obtainable by emulsion polymerisation of ethylenically unsaturated monomers in an aqueous solution of a cationic prepolymer as a dispersant, wherein the cationic prepolymer is prepared in the presence of polymerisation initiators by polymerisation of
(a) from 15 to 30% by weight of at least one ethylenically unsaturated monomer which has an amino group,
(b) from 45 to 75% by weight of at least one optionally substituted styrene,
(c) from 5 to 25% by weight of at least one C₁- to C₈- alkyl (meth) acrylate,
(d) from 0.5 to 10% by weight of at least one ethylenically unsaturated monomer comprising an acid group, and
(e) from 0 to 20% by weight of at least one non-ionic, ethylenically unsaturated monomer differing from (b) and (c),
the sum of (a) + (b) + (c) + (d) + (e) being 100% by weight,
in a solution polymerisation in a partly to completely water miscible solvent,
addition of water to the so formed prepolymer to form an aqueous solution of the prepolymer,
and thereafter carrying out an emulsion polymerisation of a monomer mixture in the aqueous solution of the prepolymer, the monomer mixture comprising
(i) from 0 to 30% by weight of at least one optionally substituted styrene,
(ii) from 50 to 100% by weight of at least one C₁- to C₁₈- alkyl (meth) acrylate,
(iii) from 0 to 30% by weight of at least one vinyl ester of linear or branched C₁- to C₃₀-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
and the solution polymerisation and/or emulsion polymerisation is optionally carried out in the presence of from 0 to 5% by weight of at least one polymerisation regulator.

The molar amount of the cationic and/or basic monomers (a) which is incorporated into the prepolymer is of course always higher than the amount of the anionic monomers (d), so that the prepolymer is cationic.

The cationic prepolymer which acts as a dispersant or protective colloid for the emulsion polymerization is prepared in a first stage of the polymerization. It is a solution polymer which, if required, can be stored for a relatively long time. Usually, it is used as a dispersant immediately after its preparation in the second stage of the polymerization.

The cationic prepolymer is obtainable by polymerization of the abovementioned monomer mixtures (a), (b), (c), (d) and optionally (e) in the presence of at least one polymerization initiator.

For the preparation of the prepolymer, at least one ethylenically unsaturated monomer which carries an amino group may be used as component (a).

In general monomers of group (a) may be any suitable ethylenically unsaturated monomer which carries an amino group.

Typical compounds having an amino group of those of general formula (I):

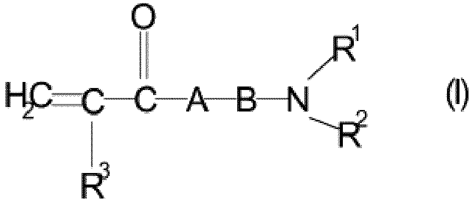

In which
A is O, NH,
B is CₙH₂ₙ, where n is an integer in the range from 1 to 8,
R₁, R₂ are CₘH₂ₘ₊₁, where m is an integer in the range from 1 to 4, and
R₃ is H, CH₃-.

The compounds of formula (I) are designated, as a rule, as cationic or as basic monomers. Basic, ethylenically unsaturated monomers are, for example, acrylates and methacrylates of amino alcohols, e.g. N,N-dimethyl amino ethyl acrylate, N,N-dimethyl amino ethyl methacrylate, N,N-diethyl amino ethyl acrylate, N,N-diethyl amino ethyl methacrylate, N,N-dimethyl amino propyl acrylate, N,N-dimethyl amino propyl methacrylate, N,N-dibutyl amino propyl acrylate, N,N-dibutylamino propyl methacrylate, N,N-dimethyl amino neopentyl acrylate, derivatives of acrylamide or of methacrylamide which comprise amino groups, such as N,N-dimethyl amino ethyl acrylamide, N,N-dimethyl amino ethyl methacrylamide, N,N-dimethyl amino propyl methacrylamide.

Preferably, the monomers of group (a) are selected from the group consisting of N,N-dimethyl amino propyl methacrylamide, N,N-dimethylaminoethyl methacrylate and N,N-dimethylaminoethyl acrylate. More preferably, the monomer of group (a) is N,N-dimethyl amino propyl methacrylamide.

The monomers of group (a) are used in the preparation of the prepolymer in an amount of from 15 to 30% by weight, preferably from 15 to 25% by weight, more preferably from 20 to 25% by weight, based on the monomer mixture (a) to (e).

For the preparation of the prepolymer, optionally substituted styrenes, such as styrene, a-methylstyrene or ethylstyrene, may be used as monomers of group (b). Preferably, the monomer of group (b) is styrene. The monomers of group (b) are present in an amount of from 45 to 75% by weight, suitably from 45 to 70% by weight, preferably from 50 to 70% by weight, more preferably from 50 to 64.5% by weight, and more preferably still from 50 to 60% by weight, in the monomer mixture comprising (a) to (e).

For the preparation of the prepolymer, monomers of group (c) are at least one of C₁- to C₈- alkyl (meth) acrylate. Examples of the monomers of group (c) methyl acrylate, ethyl acrylate, n-propyl acrylate, isopropyl acrylate, n-butyl acrylate, sec-butyl acrylate, isobutyl acrylate, tert-butyl acrylate, methyl methacrylate, ethyl methacrylate, n-propyl methacrylate, isopropyl methacrylate, n-butyl methacrylate, sec-butyl methacrylate, isobutyl methacrylate, and tert-butyl methacrylate, hexyl acrylate, hexyl methacrylate, 2-ethylhexyl acrylate, 2-ethylhexyl methacrylate, cyclohexyl acrylate and cyclohexyl methacrylate. Desirably, the monomers of group (c) are at least one of C₁ to C₄ alkyl (meth) acrylate. Preferably, monomers of group (c) are C₄- alkyl acrylates. More preferably monomers of this group are either n-butyl acrylate or tert-butyl acrylate ormixtures thereof. It is particularly preferred that the monomer of group (c) is n-butyl acrylate. Monomers of group (c) are present in the prepolymer in an amount of from 5 to 25% by weight, preferably from 15 to 25% by weight, in the monomer mixture comprising (a) to (e).

Monomers of group (d) are ethylenically unsaturated monomers comprising an acid group. By acid group we include any acid groups such as carboxylic acid, sulphonic acid and phosphonic acid. We also include the corresponding anhydride of an acid group. Examples of monomers of group (d) are ethylenically unsaturated C₃- to C₆-carboxylic acids, such as acrylic acid, methacrylic acid, maleic acid, fumaric acid, itaconic acid, ethacrylic acid, crotonic acid, monoesters of ethylenically unsaturated dicarboxylic acids, such as monomethyl maleate, monomethyl fumarate, monoethyl maleate, monoethyl fumarate, monopropyl maleate, monopropyl fumarate, mono-n-butyl maleate and mono-n-butyl fumarate, and styrenecarboxylicacids and ethylenically unsaturated anhydrides, such as maleic anhydride and itaconic anhydride. Depending on the water content of the solvent used in the first polymerization stage, the anhydride groups of the monomers are hydrolyzed to carboxyl groups. The anhydride groups are hydrolyzed in each case before the second polymerization stage if in fact the polymer solution obtained in the first polymerization stage is diluted with water. In addition, monomers comprising sulfoand/or phosphonic acid groups, such as 2-acrylamido-2-methylpropanesulfonic acid and vinylphosphonic acid, are suitable as monomers (d). The monomers comprising acid groups can be used in the form of the free acid groups and in the form partly or completely neutralized with alkali metal bases, alkaline earth metal bases, ammonia and/or amines. For example, sodium hydroxide solution, potassium hydroxide solution, sodium carbonate, sodium bicarbonate, ammonia, trimethylamine, triethylamine, morpholine, ethanolamine, diethanolamine, triethanolamine or diethylenetriamine is used for neutralizing the acid groups of the monomers. It is of course possible to use two or more bases as neutralizing agents. From this group of monomers, acrylic acid and methacrylic acid or mixtures of acrylic acid and methacrylic acid in any desired ratio are preferably used. The monomers of group (d) are present in an amount of from 0.5 to 10% by weight, preferably from 0.5 to 5% by weight, more preferably from 1 to 5% by weight, in the monomer mixture comprising (a) to (e).

The monomer mixtures used for the preparation of the prepolymer may comprise nonionic, ethylenically unsaturated monomers (e) which are different from the monomers (b) and (c). Examples of such monomers are amides, such as, for example, acrylamide, methacrylamide, N-methylacrylamide, N-methylmethacrylamide, N-ethylacrylamide and N-ethylmethacrylamide; nitrile compounds such as acrylonitrile and methacrylonitrile; vinyl compounds, such as vinyl acetate, vinyl propionate or vinylformamide; C₁₀- to C₁₈- alkyl (meth)acrylates, such as, for example, n-decyl acrylate, decyl methacrylate, lauryl acrylate, lauryl methacrylate, stearyl acrylate, stearyl methacrylate or the esters of acrylic acid or methacrylic acid which were prepared by reacting at least one ethylene oxide unit, for example hydroxyethyl methacrylate or diethylene glycol monomethacrylate. It is of course also possible to use mixtures of said monomers. If the monomers of group (d) are used, they are present in an amount of up to 20% by weight, in general in an amount of up to 10% by weight, suitably in an amount of up to 5% by weight, based on the total amount of the monomers (a) to (e) in the monomer mixture. Preferably, the prepolymer does not contain any monomers of group (e).

The sum of the data in % by weight for the monomers (a) to (e) is always 100.

Preferred finely divided, cationic polymer dispersions are those wherein the cationic prepolymer is obtainable by polymerization of
(a) from 20 to 25% by weight of at least one monomer selected from the group consisting of N,N-dimethylaminopropylmethacrylamide, N,N-dimethylaminoethyl methacrylate and N,N-dimethylaminoethyl acrylate
(b) from 50 to 64.5% by weight of styrene,
(c) from 15 to 25% by weight of at least one C₄- alkyl acrylate,
(d) from 0.5 to 5% by weight of acrylic acid and/or methacrylic acid,
the sum of (a) + (b) + (c) + (d) being 100% by weight.

In the first polymerization stage, the monomers (a) to (e) are polymerized by a solution polymerization method in a partly or completely water-miscible solvent which may comprise up to 15% by weight of water. Preferably, virtually anhydrous solvents are used. The solvents generally comprise up to about 1% by weight of water. Examples of suitable solvents are C₁- to C₃-carboxylic acids, such as formic acid, acetic acid and propionic acid, alcohols, such as methanol, ethanol, propanol and isopropanol, ketones, such as acetone and methyl ethyl ketone, amides, such as dimethylformamide, and dimethyl sulfoxide, carbonates, such as propylene carbonate or ethylene carbonate, and tetrahydrofuran. If solvents free of acid groups are used, the monomers (d) comprising acid groups are neutralized, preferably before the polymerization. In the first polymerization stage, preferably anhydrous formic acid, anhydrous acetic acid or isopropanol is used. The other reactants are then preferably likewise used in anhydrous form.

The solution polymerization in the first polymerization stage is effected in the presence of polymerization initiators which, under the polymerization conditions, form free radicals at temperatures in the range from 20 to 160°C, preferably from 60 to 120°C. If the polymerization temperature should be above the boiling point of the solvent used, the polymerization is carried out under elevated pressure, for example in an autoclave equipped with a stirrer. Preferably used initiators are those which dissolve in the organic, water-miscible solvent, for example azobisisobutyronitrile, tert-butyl peroctanoate, tert-butyl perbenzoate, benzoyl peroxide, tert-butyl perpi-valate, lauroyl peroxide, di-tert-butyl peroxide, tert-butyl hydroperoxide and hydrogen peroxide, optionally in the presence of heavy metal cations, such as, for example, cations of iron, cerium or manganese.

The monomers are used in the first polymerization stage, based on the solvent, in an amount such that polymer solutions having a polymer content of from 15 to 70% by weight, preferably from 30 to 65% by weight, are obtained. The polymers are preferably soluble in the organic, partly to completely water-miscible solvent to give a clear solution. The solution polymers obtained in the first stage are used as a dispersant/protective colloid or possibly as seed for the subsequent emulsion polymerization. For this purpose, it is necessary to add water to the prepolymer solution or to introduce the polymer solution into water. An aqueous polymer solution which may also comprise disperse fractions (colloidal solution) is obtained, from which the organic, partly to completely water-miscible solvent can be distilled off, optionally under reduced pressure.

The cationic prepolymers prepared in the first stage have a relatively low molar mass, for example Mw of from 1000 to 100 000, preferably from 5000 to 50 000 (determined by light scattering). The determination of the molecular weight distribution and of the mass average molecular weight can be carried out by methods known to the person skilled in the art, such as, for example, gel permeation chromatography, light scattering or ultracentrifuging.

The concentration of the solution polymer prepared in the first polymerization stage in the polymer solution to which water has been added is, for example, from 2 to 35, preferably from 15 to 25, % by weight. The prepolymer solution to which water has been added is then used in the second stage of the polymerization as an initially taken mixture or emulsifier/protective colloid and possibly as seed for the emulsion polymerization.

In the aqueous solution of the prepolymer, the preparation of the emulsion polymer is effected in a second polymerization stage. In this stage a monomer mixture comprising
(i) from 0 to 30% by weight of at least oneoptionally substituted styrene,
(ii) from 50 to 100% by weight of at least one C₁- to C₁₈- alkyl (meth) acrylate,
(iii) from 0 to 30% by weight of at least one vinyl ester of linear or branched C₁- to C₃₀-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
is polymerised.

The monomers of group (i) correspond to those of group (b) from the cationic prepolymer.

The monomers of group (ii) include (meth)acrylates of C₁- to C₁₈-alcohols. Monomers (ii) are, for example, methyl acrylate, ethyl acrylate, n-propyl acrylate, isopropyl acrylate, n-butyl acrylate, sec-butyl acrylate, isobutyl acrylate, tert-butyl acrylate, ethylhexyl acrylate, n-octyl acrylate, cyclohexyl acrylate, decyl acrylate, dodecyl acrylate, tetradecyl acrylate, methyl methacrylate, ethyl methacrylate, n-propyl methacrylate, isopropyl methacrylate, n-butyl methacrylate, sec-butyl methacrylate, isobutyl methacrylate, tert-butyl methacrylate, ethylhexyl methacrylate, n-octyl methacrylate, cyclohexyl methacrylate, decyl methacrylate, dodecyl methacrylate and tetradecyl methacrylate. From this group of monomers, n-butyl acrylate and tert-butyl acrylate are preferably used, in each case alone or in any desired mixtures. In such mixtures of n-butyl acrylate and tert-butyl acrylate, the weight ratio is usually from 3:1 to 1:3. However, ethylhexyl acrylate and ethylhexyl methacrylate are also suitable.

Monomers of group (iii) are vinyl esters of linear or branched C₁-C₃₀-carboxylic acids. Such carboxylic acids are saturated and straight-chain, such as formic acid, acetic acid, propionic acid, butyric acid, valeric acid, caproic acid (hexanoic acid), heptanoic acid, caprylic acid (octanoic acid), pelargonic acid, capric acid (decanoic acid), undecanoic acid, lauric acid (dodecanoic acid), tridecanoic acid, myristic acid (tetradecanoic acid), pentadecanoic acid, palmitic acid, margaric acid, stearic acid, nonadecanoic acid, arachidic acid, behenic acid, lignoceric acid (tetracosanoic acid), cerotinic acid, melissic acid (triacontanoic acid). According to the invention, saturated, branched carboxylic acids, such as, for example, isobutyric acid, isovaleric acid (3-me-thylbutyric acid) and tubercolostearic acid, and strongly branched saturated carboxylic acid are also suitable. The latter are known by the term versatic acids, such as, for example, pivalic acid, neohexanoic acid, neoheptanoic acid, neooctanoic acid, neononanoic acid and neodeca-noic acid. Suitable vinyl esters of linear or branched C₁-C₃₀-carboxylic acids are, for example, vinyl laurate, vinyl stearate, vinyl propionate, vinyl versatate, vinyl acetate, vinyl propylheptanoate, vinyl neodecanoate (VeoVa® 10 from Hexion Specialty Chemicals), vinyl neononanoate (VeoVa® 9 from Hexion Specialty Chemicals) and vinyl pelargonate.

Examples of suitable monomers of group (iv) are acrylamide, methacrylamide, N-methylolacrylamide, N-methylolmethacrylamide, N-C₁- to C₁₈-alkylacrylamides, N-C₁- to C₁₈-alkylmethacrylamides, acrylonitrile, methacrylonitrile, N-vinylamides, C₁- to C₁₈-alkyl vinyl ethers, hydroxyalkyl esters and esters of monoethylenically unsaturated mono- and dicarboxylic acids with C₂-C₄-polyalkylene glycols.

The monomers of group (iv) furthermore include the monoethylenically unsaturated monomers which have already been mentioned under (a) and have at least one amino group protonatable in an aqueous medium and/or a quaternary ammonium group.

In addition, crosslinking monomers can also be used as monomers (iv). Examples of such crosslinking agents are butanediol diacrylate, butanediol dimethacrylate, hexanediol diacrylate, hexanediol dimethacrylate, glycol diacrylate, glycol dimethacrylate, trimethylolpropane triacrylate, trimethylolpropane trimethacrylate, pentaerythrityl triacrylate, pentaerythrityl tetraacrylate, diacrylates and dimethacrylates of alkoxylated dihydric alcohols, divinylurea and/or conjugated diolefins, such as butadiene or isoprene.

Depending on the intended use, the monomers of group (iv) may also comprise so-called functional monomers, i.e. monomers which, in addition to a polymerizable C=C double bond, also have a reactive functional group, for example an oxirane group, a reactive carbonyl group, e.g. an acetoacetyl group, an isocyanate group, an N-hydroxymethyl group, an N-alkoxymethyl group, a trialkylsilyl group, a trialkoxysilyl group or another group reactive toward nucleophiles.

Preferably, the monomer mixture comprises
(i) from 15 to 30% by weight of styrene,
(ii) from 70 to 85% by weight of at least one monomer selected from the group consisting of n-butyl acrylate, tert-butyl acrylate or mixtures of n-butyl acrylate and tert-butylacrylate,
the sum of (i) + (ii) being 100% by weight.

The polymerization of the monomers (i), (ii), optionally (iii) and optionally (iv) is effected by an emulsion polymerization method, i.e. the monomers to be polymerized are present in the polymerization mixture as an aqueous emulsion. The cationic prepolymers described above are used for stabilizing the monomer emulsions.

The emulsion polymerization is effected in general in a temperature range of from 40 to 150°C, preferably from 60 to 90°C, in the presence of customary amounts of preferably water-soluble polymerization initiators. In general, from 0.2 to 4, preferably from 0.5 to 2, % by weight of at least one initiator, based on the monomers to be polymerized, are used. Suitable initiators are, for example, azo compounds, peroxides, hydroperoxides, hydrogen peroxide, inorganic peroxides and redox systems, such as combinations of hydrogen peroxide and ascorbic acid or tert-butyl hydroperoxide and ascorbic acid. The redox systems can moreover comprise heavy metal cations, such as cerium, manganese or iron (II) ions, for activation.

In the emulsion polymerization, the monomers can either be metered directly into the initially taken mixture or they can be fed in the form of an aqueous emulsion or miniemulsion to the polymerization batch. In order to emulsify the monomers in water, for example, a part of the prepolymer diluted with water and obtained from the first polymerization stage can be used as an emulsifier or the monomers are emulsified with the aid of customary nonionic, anionic, cationic or amphoteric emulsifiers in water.

Customary emulsifiers are used only if required. The amounts used are, for example, from 0.05 to 3% by weight and are preferably in the range from 0.5 to 2% by weight. Customary emulsifiers are described in detail in the literature, cf. for example M. Ash, I. Ash, Handbook of Industrial Surfactants, Third Edition, Synapse Information Resources Inc. Examples of customary emulsifiers are the reaction products of long-chain monohydric alcohols (C₁₀- to C₂₂-alkanols) with from 4 to 50 mol of ethylene oxide and/or propylene oxide per mole of alcohol or ethoxylated phenols or alkoxylated alcohols esterified with sulfuric acid, which are generally used in the form neutralized with alkalis. Further customary emulsifiers are, for example, sodium alkanesulfonates, sodium alkylsulfates, sodium dodecylbenzenesulfonate, sulfosuccinic esters, quaternary alkylammonium salts, alkylbenzylammonium salts, such as dimethyl-C₁₂- to C₁₈-alkylbenzylammonium chlorides, primary, secondary and tertiary fatty amine salts, quaternary amidoamine compounds, alkylpyridinium salts, alkylimidazolinium salts and alkyloxazolinium salts. Preferably, however, no emulsifiers are used.

Suitably the emulsion polymerisation process can be carried out by metering the monomer mixture into the process. The metering of the monomers for carrying out the emulsion polymerization can be effected continuously or batchwise. With the use of a monomer mixture, the metering of the monomers can be effected as a mixture or separately or in the manner of a step or gradient procedure. The addition can be effected uniformly or nonuniformly, i.e. with a changing metering rate, over the metering period. By adding a portion of the monomer to the initially taken mixture comprising aqueous solution/dispersion of the prepolymer, metering by means of a swelling procedure is possible.

It may be desirable that the solution polymerization and/or the emulsion polymerization is carried out in the presence of polymerization regulators. Suitable regulators are, for example, mercaptans, such as ethyl mercaptan, n-butyl mercaptan, tert-butyl mercaptan, n-dodecyl mercaptan or tert-dodecyl mercaptan, thioglycolic acid, 2-ethylhexyl thioglycolate or carbon tetrabromide. Furthermore, suitable regulators are from the class consisting of the terpenes, preferably from the class consisting of the monocyclic terpenes and particularly preferably from the group consisting of the menthadienes. Among said regulators of the group consisting of thementhadienes, terpinolene is very particularly preferred. If polymerization regulators are used, the amounts of regulator are, for example, from 0.1 to 5% by weight, suitably from 0.5 to 5% by weight. Preferably the solution polymerisation and the emulsion polymerisation are carried out in the absence of polymerisation regulator.

The pH of the reaction mixture is, for example, in the range from 1 to 5, in general from 2 to 4, in the second polymerization stage.

In order to remove the remaining monomers as substantially as possible from the polymer dispersion, a postpolymerization is expediently carried out after the end of the actual polymerization. For this purpose, for example, an initiator from the group consisting of hydrogen peroxide, peroxides, hydroperoxides and/or azo initiators is added to the polymer dispersion after the end of the main polymerization. Combining of the initiators with suitable reducing agents, such as, for example, ascorbic acid or sodium bisulfite, is also possible. Oil-soluble, sparingly water-soluble initiators are preferably used, for example customary organic peroxides, such as dibenzoyl peroxide, di-tert-butyl peroxide, tert-butyl hydroperoxide, cumyl hydroperoxide or biscyclohexyl peroxydicarbonate. For the postpolymerization, the reaction mixture is heated, for example, to a temperature which corresponds to the temperature at which the main polymerization was carried out or which is up to 20°C, preferably up to 10°C, lower. The main polymerization is complete when the polymerization initiator has been consumed or the monomer conversion is, for example, at least 98%, preferably at least 99.5%. For the postpolymerization, tert-butyl hydroperoxide is preferably used. The polymerization is carried out, for example, in atemperature range of from 40 to 110°C, in general from 50 to 105°C.

In the second polymerization stage, finely divided, aqueous polymer dispersions which have cationic properties owing to the composition of the prepolymer are obtained. The mean particle size of the dispersed particles is from 5 to 250 nm, preferably <100 nm, particular- ly preferably from 10 to 60 nm. The mean particle size can be determined by methods known to the person skilled in the art, such as, for example, laser correlation spectroscopy, ultracentrifug- ing or CHDF. A further measure of the particle size of the dispersed polymer particles is the LT value. For determining the LT value (light transmittance), the polymer dispersion to be investigated in each case is measured in 0.1% strength by weight aqueous formulation in a cell having an edge length of 2.5 cm with light of wavelength 600 nm. The mean particle size can be calculated from the measured values, cf. B. Verner, M. Barta, B. Sedlacek, Tables of Scattering Functions for Spherical Particles, Prague 1976, Edice Marco, Rada D-DATA, SVAZEK D-1.

The polymer concentration of the aqueous dispersions obtained in the emulsion polymerization is, for example, from 15 to 45, preferably from 25 to 35, % by weight.

The invention also relates to a process for the preparation of the finely divided, cationic, aqueous polymer dispersions having a mean particle size of from 5 to 250 nm by a two-stage polymerisation reaction, wherein in a first stage a cationic prepolymer is prepared in the presence of polymerisation initiators by polymerisation of
(a) from 15 to 30% by weight of at least one ethylenically unsaturated monomer which has an amino group,
(b) from 45 to 75% by weight of at least one optionally substituted styrene,
(c) from 5 to 25% by weight of at least one C₁- to C₈- alkyl (meth) acrylate,
(d) from 0.5 to 10% by weight of at least one ethylenically unsaturated monomer comprising an acid group, and
(e) from 0 to 20% by weight of at least one non-ionic, ethylenically unsaturated monomer differing from (b) and (c),
the sum of (a) + (b) + (c) + (d) + (e) being 100% by weight,
in a solution polymerisation in a partly to completely water miscible solvent,
addition of water to the so formed prepolymer to form an aqueous solution of the prepolymer,
and in a second stage carrying out an emulsion polymerisation of a monomer mixture in the aqueous solution of the prepolymer, the monomer mixture comprising
(i) from 0 to 30% by weight of at least one optionally substituted styrene,
(ii) from 50 to 100% by weight of at least one C₁- to C₁₈- alkyl (meth) acrylate,
(iii) from 0 to 30% by weight of at least one vinyl ester of linear or branched C₁- to C₃₀-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
and the solution polymerisation and/or emulsion polymerisation is optionally carried out in the presence of from 0 to 5% by weight of at least one polymerisation regulator.

The finely divided, cationic aqueous polymer dispersions described above can be used as sizing agents for paper, board and cardboard. They can be used for the production of all paper varieties, for example of writing and printing papers and packaging papers and papers for the packaging of liquids. They are suitable in particular for the surface sizing of paper products. The dispersions according to the invention can be processed by all methods suitable in surface sizing, but they can also be used for engine sizing (also known as internal sizing). For use as a size, the aqueous polymer dispersions are diluted by adding water, generally to a polymer content of, for example, from 0.05 to 5% by weight. The amount of polymer dispersion depends on the desired degree of sizing of the papers or paper products to be finished. Such preparation solutions may comprise further substances, for example starch, dyes, optical brighteners, biocides, paper strength agents, fixing agents, antifoams, retention aids and/or drainage aids. The size dispersion can be applied to paper, board or cardboard by means of a size press or other application units, such as a film press, speedsize or gate roll. The amount of polymer which is applied to the surface of paper products is, for example, from 0.005 to 1.0 g/m², preferably from 0.01 to 0.5 g/m².

Even in a very low dose, the polymer dispersions according to the invention exhibit a good sizing effect on all papers produced with different fiber types from unbleached softwood, unbleached deciduous wood, unbleached hardwood, bleached softwood, bleached deciduous wood, bleached hardwood, deinked fibers or mixtures of different fiber types. Furthermore, the dispersions according to the invention exhibit very good compatibility with the customary starches, for example potato starch, corn starch, wheat starch, tapioca starch. Moreover, the dispersions according to the invention exhibit complete development of sizing immediately after the production and drying of the paper web. The polymer dispersions also exhibit improved stability of the cationic charge over a wider pH range than other comparable polymer dispersions containing amino monomer components.

The invention is illustrated in more detail with reference to the following, non-limiting examples.

### Examples

The stated percentages in the examples are percent by weight, unless evident otherwise from the context.

The polymer solids content for each of the dispersions was approximately 30% by weight.

The particle sizes were determined by means of a high-performance particle sizer (HPPS) from Malvern using a He-Ne laser (633 nm) at a scattering angle of 173°.

### Comparative Example 1

102.5 g of anhydrous acetic acid (glacial acetic acid) were initially taken in a 2 l glass reactor having a stirrer and internal temperature measurements and were heated to 105°C under a nitrogen atmosphere. 155 g of styrene, 65 g of N,N-dimethylaminopropylmethacrylamide, and 5 g of acrylic acid were metered in with stirring in a period of 90 min at 105°C. Simultaneously with the monomer feed, the feed of 8.85 g of ter-butylperoctanoate in 18.2 g of isopropanol was started and was metered in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide so- lution were added over the course of 30 min at 80°C. Thereafter, a mixture of 55 g of styrene
and 220 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineralized water were added and cooling to the room temperature was effected.

A finely divided polymer dispersion having a solid content of 30.4% by weight and particle size of 48 nm (HPPS).

### Comparative Example 2

102.5 g of anhydrous acetic acid (glacial acetic acid) were initially taken in a 2 l glass reactor having a stirrer and internal temperature measurements and were heated to 105°C under a nitrogen atmosphere. 155 g of styrene, 65 g of N,N-dimethylaminopropylmethacrylamide and 5 g of acrylic acid were metered in with stirring in a period of 90 min at 105°C. Simultaneously with the monomer feed, the feed of 8.85 g of ter-butyl peroctanoate in 18.2 g of isopropanol was started and was metered in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide so- lution were added over the course of 30 min at 80°C. Thereafter, a mixture of 137.5 g of styrene and 137.5 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min.

Finally, 5 g of commercial available antifoam (Afranil™ T from BASF SE) and 34 g of demineralized water were added and cooling to the room temperature was effected.

A finely divided polymer dispersion having a solid content of 29.7% by weight and particle size of 48 nm (HPPS).

### Comparative Example 3

102.5 g of anhydrous acetic acid (glacial acetic acid) were initially taken in a 2 l glass reactor having a stirrer and internal temperature measurements and were heated to 105°C under a nitrogen atmosphere. 150.5 g of styrene, 64 g of N,N-dimethylaminopropylmethacrylamide and 10.5 g of acrylic acid were metered in with stirring in a period of 90 min at 105°C. Simultaneously with the monomer feed, the feed of 8.85 g of ter-butyl peroctanoate in 18.2 g of isopropanol was started and was metered in the course of 105 min. The reaction mixture was then subjected to post-polymerisation at 105°C for 60 min.

925 g of demineralized water were then added to the homogenous polymer material at 85°C. After addition of 1.50 g of 10%strength by weight iron (II) sulfate solution and 10 g of 10% strength by weight ascorbic acid solution, 20 g of 5% strength by weight hydrogen peroxide so- lution were added over the course of 30 min at 80°C. Thereafter, a mixture of 115.5 g of styrene and 159.5 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineral- ized water were added and cooling to the room temperature was effected.

A finely divided polymer dispersion having a solid content of 30.15% by weight and particle size of 53 nm (HPPS).

### Comparative Example 4

102.5 g of anhydrous acetic acid (glacial acetic acid) were initially taken in a 2 l glass reactor having a stirrer and internal temperature measurements and were heated to 105°C under a nitrogen atmosphere. 157.2 g of styrene, 30.5 g of N,N-dimethylaminopropylmethacrylamide, 22.05 g of N,N-dimethylaminoethyl methacrylate and 15.25 g of acrylic acid were metered in with stirring in a period of 90 min at 105°C. Simultaneously with the monomer feed, the feed of 8.85 g of ter-butyl peroctanoate in 18.2 g of isopropanol was started and was metered in the course of 105 min. The reaction mixture was then subjected to post-polymerisation at 105°C for 60 min.

925 g of demineralized water were then added to the homogenous polymer material at 85°C. After addition of 1.50 g of 10%strength by weight iron (II) sulfate solution and 10 g of 10% strength by weight ascorbic acid solution, 20 g of 5% strength by weight hydrogen peroxide so- lution were added over the course of 30 min at 80°C. Thereafter, a mixture of 122.45 g of sty- rene, 40.70 g of n-butyl acrylate and 111.85 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineralized water were added and cooling to the room temperature was effected.

A finely divided polymer dispersion having a solid content of 30.5% by weight and particle size of 36 nm (HPPS).

### Example 1

102.5 g of anhydrous acetic acid (glacial acetic acid) were initially taken in a 2 l glass reactor having a stirrer and internal temperature measurements and were heated to 105°C under a nitrogen atmosphere. 125 g of styrene, 20 g of n-butyl acrylate, 50 g of N,N-dimethylamino-propylmethacrylamide, 5.0 g of acrylic acid and 25 g of tert-butyl acrylate were metered in with stirring in a period of 90 min at 105°C. Simultaneously with the monomer feed, the feed of 8.85 g of ter-butyl peroctanoate in 18.2 g of isopropanol was started and was metered in the course of 105 min. The reaction mixture was then subjected to post-polymerisation at 105°C for 60 min.

925 g of demineralized water were then added to the homogenous polymer material at 85°C. After addition of 1.50 g of 10%strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 75 g of styrene and 200 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineral- ized water were added and cooling to the room temperature was effected.

A finely divided polymer dispersion having a solid content of 29.9% by weight and particle size of 54 nm (HPPS).

### Example 2

102.5 g of anhydrous acetic acid (glacial acetic acid) were initially taken in a 2 l glass reactor having a stirrer and internal temperature measurements and were heated to 105°C under a nitrogen atmosphere. 125 g of styrene, 50 g of N,N-dimethylaminopropylmethacrylamide, 45 g of tert-butyl acrylate and 5.0 g of acrylic acid were metered in with stirring in a period of 90 min at 105°C. Simultaneously with the monomer feed, the feed of 8.85 g of ter-butyl peroctanoate in 18.2 g of isopropanol was started and was metered in in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 75 g of styrene and 200 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineral- ized water were added and cooling to the room temperature was effected.

A finely divided polymer dispersion having a solid content of 29.9% by weight and particle size of 52 nm (HPPS).

### Example 3

102.5 g of anhydrous acetic acid (glacial acetic acid) were initially taken in a 2 l glass reactor having a stirrer and internal temperature measurements and were heated to 105°C under a nitrogen atmosphere. 120 g of styrene, 50 g of tert-butyl acrylate, 50 g of N,N-dimethylamino-propylmethacrylamide and 5.0 g of acrylic acid were metered in with stirring in a period of 90 min at 105°C. Simultaneously with the monomer feed, the feed of 8.85 g of ter- butylperoctanoate in 18.2 g of isopropanol was started and was metered in in the course of 105
min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 105 g of styrene and 170 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineralized water were added and cooling to the room temperature was effected.

A finely divided polymer dispersion having a solid content of 29.8% by weight and particle size 25 of 51 nm (HPPS).

### Example 4

102.5 g of anhydrous acetic acid (glacial acetic acid) were initially taken in a 2 l glass reactor having a stirrer and internal temperature measurements and were heated to 105°C under a nitrogen atmosphere. 125 g of styrene, 45 g of n-butyl acrylate, 50 g of N,N-dimethylamino-propylmethacrylamide and 5.0 g of acrylic acid were metered in with stirring in a period of 90 min at 105°C. Simultaneously with the monomer feed, the feed of 8.85 g of ter-butyl peroctano- ate in 18.2 g of isopropanol was started and was metered in in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 55 g of styrene and 220 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil ™ T from BASF SE) and 34 g of demineralized water were added and cooling to the room temperature was effected.

A finely divided polymer dispersion having a solid content of 29.6% by weight and particle size of 48 nm (HPPS).

### Example 5

102.5 g of anhydrous acetic acid (glacial acetic acid) were initially taken in a 2 l glass reactor having a stirrer and internal temperature measurements and were heated to 105°C under a nitrogen atmosphere. 125 g of styrene, 35 g of n-butyl acrylate, 50 g of N,N-dimethylamino-propylmethacrylamide and 15.0 g of acrylic acid were metered in with stirring in a period of 90 min at 105°C. Simultaneously with the monomer feed, the feed of 8.85 g of ter-butyl peroctanoate in 18.2 g of isopropanol was started and was metered in in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide so- lution were added over the course of 30 min at 80°C. Thereafter, a mixture of 55 g of styrene and 220 g of tert-butyl acrylate was metered in at 80°C over a period of 120 min. At the same
time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil ™ T from BASF SE) and 34 g of demineralized water were added and cooling to the room temperature was effected.

A finely divided polymer dispersion having a solid content of 29.5% by weight and particle size of 46 nm (HPPS).

### Example 6

102.5 g of anhydrous acetic acid (glacial acetic acid) were initially taken in a 2 l glass reactor having a stirrer and internal temperature measurements and were heated to 105°C under a nitrogen atmosphere. 150 g of styrene, 15 g of n-butyl acrylate, 50 g of N,N-dimethylamino-propylmethacrylamide and 10.0 g of acrylic acid were metered in with stirring in a period of 90 min at 105°C. Simultaneously with the monomer feed, the feed of 8.85 g of ter-butyl peroctanoate in 18.2 g of isopropanol was started and was metered in in the course of 105 min. The reaction mixture was then subjected to post-polymerisation at 105°C for 60 min.

925 g of demineralized water were then added to the homogenous polymer material at85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 55 g of styrene and 220 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil ™ T from BASF SE) and 34 g of demineral- ized water were added and cooling to the room temperature was effected.

A finely divided polymer dispersion having a solid content of 30.1% by weight and particle size of 44 nm (HPPS).

### Example 7

102.5 g of anhydrous acetic acid (glacial acetic acid) were initially taken in a 2 l glass reactor having a stirrer and internal temperature measurements and were heated to 105°C under a nitrogen atmosphere. 140 g of styrene, 25 g of n-butyl acrylate, 50 g of N,N-dimethylamino-propylmethacrylamide and 10.0 g of acrylic acid were metered in with stirring in a period of 90 min at 105°C. Simultaneously with the monomer feed, the feed of 8.85 g of ter-butyl peroctanoate in 18.2 g of isopropanol was started and was metered in in the course of 105 min. The reaction mixture was then subjected to post-polymerisation at 105°C for 60 min.

925 g of demineralized water were then added to the homogenous polymer material at85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 55 g of styrene and 220 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineral- ized water were added and cooling to the room temperature was effected.

A finely divided polymer dispersion having a solid content of 29.8% by weight and particle size of 46 nm (HPPS).

### Example 8

102.5 g of anhydrous acetic acid (glacial acetic acid) and 10 g of acrylic acid were initially taken in a 2 l glass reactor having a stirrer and internal temperature measurements and were heated to 105°C under a nitrogen atmosphere. 140 g of styrene, 25 g of n-butyl acrylate and 50 g of N,N-dimethylamino-propylmethacrylamide were metered in with stirring in a period of 90 min at 105°C. Simultaneously with the monomer feed, the feed of 8.85 g of ter-butylperoctanoate in 18.2 g of isopropanol was started and was metered in in the course of 105 min. The reaction mixture was then subjected to post-polymerisation at 105°C for 60 min.

925 g of demineralized water were then added to the homogenous polymer material at 85°C. After addition of 1.50 g of 10% strength by weight iron (II) sulfate solution and 10 g of 10% strength by weight ascorbic acid solution, 20 g of 5% strength by weight hydrogen peroxide solution were added over the course of 30 min at 80°C. Thereafter, a mixture of 55 g of styrene and 220 g of tert-butyl acrylate was metered in at 80°C over a period of 120 min. At the same time, 80 g of a 5% strength by weight hydrogen peroxide solution were added in as a separate feed in a period of 150 min. After the end of the initiator feed, post-polymerisation was effected for 30 min and cooling to 70°C was effected. Thereafter, 10 g of a 10% strength by weight ascorbic acid solution was effected. The reaction mixture was then stirred for a further 20 min. Finally, 5 g of commercial available antifoam (Afranil™ T from BASF SE) and 34 g of demineralized water were added and cooling to the room temperature was effected.

A finely divided polymer dispersion having a solid content of 29.6% by weight and particle size of 123 nm (HPPS).

### Performance Testing of polymer dispersions:

For testing the surface sizing effect in use, the dispersions according to the invention and the comparative dispersions were tested according to the following procedure.

An aqueous solution of a degraded corn starch was adjusted to the desired concentration. The dispersions to be tested were then metered into the starch solution so that the size press liquor comprised 60 g/l of a degraded corn starch and 0.6 - 1.0 g/l of the respective dispersions.

The mixtures of starch solution and polymer dispersion were applied by means of a laboratory size press to a test paper (reclaimed paper, 140 g/m² basis weight) at a temperature 55°C. To this end, the paper was passed twice through the size press at a speed of 2 m/min and a pressure of 1 bar. An average weight increase of about 45% being achieved.

The surface sized papers were dried on a drying cylinder at 120°C. The papers were subsequently stored overnight in a conditioned room (23°C and 50% relative humidity) before the degree of sizing was measured.

For determining the degree of sizing of the surface-sized papers, the Cobb 60 and Cobb 120 values according to DIN EN 20 535 were determined. The Cobb 60 value is defined as the water absorption of the paper sheet in g/m² after contact with water and a contact time of 60 s for Cobb 60 or 120 s in the case of the Cobb 120 value. The lower the Cobb value, the better is the sizing effect of the dispersion used.

The sizing results are shown in Table 1.

**Table 1**

| | Cobb 60 | Cobb 60 | Cobb 60 | Cobb 120 |
|---|---|---|---|---|
| | 0.6 g/l | 0.8 g/l | 1.0 g/l | 1.0 g/l |
| Comparative Example 1 | 86 | 49 | 39 | 84 |
| Comparative Example 2 | 108 | 57 | 41 | 83 |
| Comparative Example 3 | 78 | 56 | 35 | 72 |
| Comparative Example 4 | 94 | 53 | 34 | 63 |
| Example 1 | 54 | 35 | 26 | 37 |
| Example 2 | 34 | 30 | 28 | 48 |
| Example 3 | 41 | 31 | 29 | 39 |
| Example 4 | 45 | 32 | 24 | 42 |
| Example 5 | 53 | 35 | 26 | 48 |
| Example 6 | 52 | 32 | 29 | 51 |
| Example 7 | 42 | 32 | 29 | 39 |
| Example 8 | 44 | 31 | 30 | 50 |

## Claims

1. A finely divided, cationic, aqueous polymer dispersion having a mean particle size of from 5 to 250 nm which is obtainable by emulsion polymerisation of ethylenically unsaturated monomers in an aqueous solution of a cationic pre- polymer as a dispersant, wherein the cationic prepolymer is prepared in the presence of polymerisation initiators by polymerisation of
(a) from 15 to 30% by weight of at least one ethylenically unsaturated monomer which has an amino group,
(b) from 45 to 75% by weight of at least one optionally substituted styrene,
(c) from 5 to 25% by weight of at least one C₁- to C₈- alkyl (meth) acrylate,
(d) from 0.5 to 10% by weight of at least one ethylenically unsaturated monomer comprising an acid group, and
(e) from 0 to 20% by weight of at least one non-ionic, ethylenically unsaturated monomer differing from (b) and (c),
the sum of (a) + (b) + (c) + (d) + (e) being 100% by weight,
in a solution polymerisation in a partly to completely water miscible solvent,
addition of water to the so formed prepolymer to form an aqueous solution of the prepolymer,
and thereafter carrying out an emulsion polymerisation of a monomer mixture in the aqueous solution of the prepolymer, the monomer mixture comprising
(i) from 0 to 30% by weight of at least one optionally substituted styrene,
(ii) from 50 to 100% by weight of at least one C₁- to C₁₈- alkyl (meth) acrylate,
(iii) from 0 to 30% by weight of at least one vinyl ester of linear or branched C₁- to C₃₀-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
and the solution polymerisation and/or emulsion polymerisation is optionally carried out in the presence of from 0 to 5% by weight of at least one polymerisation regulator.

2. The finely divided, cationic, aqueous polymer dispersion according to claim 1, which is obtainable by emulsion polymerisation of ethylenically unsaturated monomers in an aqueous solution of a cationic prepolymer as a dispersant, wherein the cationic prepolymer is prepared in the presence of polymerisation initiators by polymerisation of
(a) from 15 to 30% by weight of at least one ethylenically unsaturated monomer which has an amino group,
(b) from 45 to 70% by weight of at least one optionally substituted styrene,
(c) from 5 to 25% by weight of at least one C₁- to C₄- alkyl (meth) acrylate,
(d) from 0.5 to 10% by weight of at least one ethylenically unsaturated monomer comprising an acid group, and
(e) from 0 to 20% by weight of at least one non-ionic, ethylenically unsaturated monomer differing from (b) and (c),
the sum of (a) + (b) + (c) + (d) + (e) being 100% by weight,
in a solution polymerisation in a partly to completely water miscible solvent,
addition of water to the so formed prepolymer to form an aqueous solution of the prepolymer,
and thereafter carrying out an emulsion polymerisation of a monomer mixture in the aqueous solution of the prepolymer, the monomer mixture comprising
(i) from 0 to 30% by weight of at least one optionally substituted styrene,
(ii) from 50 to 100% by weight of at least one C₁- to C₁₈- alkyl (meth) acrylate,
(iii) from 0 to 30% by weight of at least one vinyl ester of linear or branched C₁- to C₃₀-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
and the solution polymerisation and/or emulsion polymerisation is optionally carried out in the presence of from 0 to 5% by weight of at least one polymerisation regulator.

3. The finely divided, cationic, aqueous polymer dispersion according to either of claim 1 or claim 2, wherein the cationic prepolymer is obtainable by the polymerisation of
(a) from 20 to 25% by weight of at least one monomer selected from the group consisting of N,N-dimethylaminopropylmethacrylamide, N,N-dimethylaminoethyl methacrylate and N,N- dimethylaminoethyl acrylate
(b) from 50 to 64.5% by weight of styrene,
(c) from 15 to 25% by weight of at least one C₄- alkyl acrylate,
(d) from 0.5 to 5% by weight of acrylic acid and/or methacrylic acid,
the sum of (a) + (b) + (c) + (d) being 100% by weight.

4. The finely divided, cationic, aqueous polymer dispersion according to any of claims 1 to 3, wherein, in the second polymerisation stage the monomer mixture comprises
(i) from 15 to 30% by weight of styrene,
(ii) from 70 to 85% by weight of at least one monomer selected from the group consisting of n-butyl acrylate, tert-butyl acrylate or mixtures of n-butyl acrylate and tert-butyl acrylate,
the sum of (i) + (ii) being 100% by weight.

5. The finely divided, cationic, aqueous polymer dispersion according to any of claims 1 to 4 in which the solution polymerisation and the emulsion polymerisation are carried out in the ab- sence of polymerisation regulator.

6. The finely divided, cationic, aqueous polymer dispersion according to any of claims 1 to 5 in which the component (a) of the cationic prepolymer is N,N-dimethylaminopropylmethacrylamide.

7. The finely divided, cationic, agueous polymer dispersion according to any of claims 1 to 6 in which the component (c) is n-butyl acrylate.

8. A process for the preparation of the finely divided, cationic, aqueous polymer dispersions according to any of claims 1 to 7 by a two-stage polymerisation reaction, wherein in a first stage a cationic prepolymer is prepared in the presence of polymerisation initiators by polymerisation of
(a) from 15 to 30% by weight of at least one ethylenically unsaturated monomer which has an amino group,
(b) from 45 to 75% by weight of at least one optionally substituted styrene,
(c) from 5 to 25% by weight of at least one C₁- to C₈- alkyl (meth) acrylate,
(d) from 0.5 to 10% by weight of at least one ethylenically unsaturated monomer comprising an acid group, and
(e) from 0 to 20% by weight of at least one non-ionic, ethylenically unsaturated monomer dif- fering from (b) and (c),
the sum of (a) + (b) + (c) + (d) + (e) being 100% by weight,
in a solution polymerisation in a partly to completely water miscible solvent,
addition of water to the so formed prepolymer to form an aqueous solution of the prepolymer,
and in a second stage carrying out an emulsion polymerisation of a monomer mixture in the aqueous solution of the prepolymer, the monomer mixture comprising,
(i) from 0 to 30% by weight of at least one optionally substituted styrene
(ii) from 50 to 100% by weight of at least one C₁- to C₁₈- alkyl (meth) acrylate,
(iii) from 0 to 30% by weight of at least one vinyl ester of linear or branched C₁- to _{C30}-carboxylic acid, and
(iv) from 0 to 30% by weight of at least one non-ionic ethylenically unsaturated monomer differing from (i), (ii) and (iii),
the sum of (i) + (ii) + (iii) + (iv) being 100% by weight,
and the solution polymerisation and/or emulsion polymerisation is optionally carried out in the presence of from 0 to 5% by weight of at least one polymerisation regulator.

9. The use of the finely divided, cationic, aqueous polymer dispersions according to any of claims 1 to 7 as sizing agents for paper, board and cardboard.

## Patentansprüche

1. Feinverteilte, kationische, wässrige Polymerdispersion mit einer mittleren Teilchengröße von 5 bis 250 nm, erhältlich durch Emulsionspolymerisation von ethylenisch ungesättigten Monomeren in einer wässrigen Lösung eines kationischen Präpolymers als Dispergiermittel, **dadurch gekennzeichnet, dass** das kationische Präpolymer in Gegenwart von Polymerisationsinitiatoren hergestellt wird durch Polymerisation von
(a) 15 bis 30 Gew.-% mindestens eines ethylenisch ungesättigten Monomers, das eine Aminogruppe aufweist,
(b) 45 bis 75 Gew.-% mindestens eines gegebenenfalls substituierten Styrols,
(c) 5 bis 25 Gew.-% mindestens eines C₁ bis C₈ Alkyl(meth)acrylats,
(d) 0,5 bis 10 Gew.-% mindestens eines ethylenisch ungesättigten Monomers, das eine Säuregruppe umfasst, und
(e) 0 bis 20 Gew.-% mindestens eines nicht-ionischen, ethylenisch ungesättigten Monomers, das sich von (b) und (c) unterscheidet,
wobei die Summe von (a) + (b) + (c) + (d) + (e) 100 Gew.-% beträgt,
in einer Lösungspolymerisation in einem teilweise bis vollständig mit Wasser mischbaren Lösungsmittel,
Zugabe von Wasser zu dem so gebildeten Präpolymer zur Bildung einer wässrigen Lösung des Präpolymers,
und anschließende Durchführung einer Emulsionspolymerisation einer Monomermischung in der wässrigen Lösung des Präpolymers, wobei die Monomermischung umfaßt
(i) 0 bis 30 Gew.-% mindestens eines gegebenenfalls substituierten Styrols,
(ii) 50 bis 100 Gew.-% mindestens eines C₁ bis C₁₈ Alkyl(meth)acrylats,
(iii) 0 bis 30 Gew.-% mindestens eines Vinylesters einer linearen oder verzweigten Ci bis C₃₀ Carbonsäure, und
(iv) 0 bis 30 Gew.-% mindestens eines nicht-ionischen ethylenisch ungesättigten Monomers, das sich von (i), (ii) und (iii) unterscheidet,
wobei die Summe von (i) + (ii) + (iii) + (iv) 100 Gew.-% beträgt,
und die Lösungspolymerisation und/oder Emulsionspolymerisation gegebenenfalls in Gegenwart von 0 bis 5 Gew.-% mindestens eines Polymerisationsregulators durchgeführt wird.

2. Feinverteilte, kationische, wässrige Polymerdispersion gemäß Anspruch 1, erhältlich durch Emulsionspolymerisation von ethylenisch ungesättigten Monomeren in einer wässrigen Lösung eines kationischen Präpolymers als Dispergiermittel, **dadurch gekennzeichnet, dass** das kationische Präpolymer in Gegenwart von Polymerisationsinitiatoren hergestellt wird durch Polymerisation von
(a) 15 bis 30 Gew.-% mindestens eines ethylenisch ungesättigten Monomers, das eine Aminogruppe aufweist,
(b) 45 bis 70 Gew.-% mindestens eines gegebenenfalls substituierten Styrols,
(c) 5 bis 25 Gew.-% mindestens eines C₁ bis C₄ Alkyl(meth)acrylats,
(d) 0,5 bis 10 Gew.-% mindestens eines ethylenisch ungesättigten Monomers, das eine Säuregruppe umfasst, und
(e) 0 bis 20 Gew.-% mindestens eines nicht-ionischen, ethylenisch ungesättigten Monomers, das sich von (b) und (c) unterscheidet,
wobei die Summe von (a) + (b) + (c) + (d) + (e) 100 Gew.-% beträgt,
in einer Lösungspolymerisation in einem teilweise bis vollständig mit Wasser mischbaren Lösungsmittel,
Zugabe von Wasser zu dem so gebildeten Präpolymer zur Bildung einer wässrigen Lösung des Präpolymers,
und anschließende Durchführung einer Emulsionspolymerisation einer Monomermischung in der wässrigen Lösung des Präpolymers, wobei die Monomermischung umfaßt
(i) 0 bis 30 Gew.-% mindestens eines gegebenenfalls substituierten Styrols,
(ii) 50 bis 100 Gew.-% mindestens eines C₁ bis C₁₈ Alkyl(meth)acrylats,
(iii) 0 bis 30 Gew.-% mindestens eines Vinylesters einer linearen oder verzweigten C₁ bis C₃₀ Carbonsäure, und
(iv) 0 bis 30 Gew.-% mindestens eines nicht-ionischen ethylenisch ungesättigten Monomers, das sich von (i), (ii) und (iii) unterscheidet,
wobei die Summe von (i) + (ii) + (iii) + (iv) 100 Gew.-% beträgt,
und die Lösungspolymerisation und/oder Emulsionspolymerisation gegebenenfalls in Gegenwart von 0 bis 5 Gew.-% mindestens eines Polymerisationsregulators durchgeführt wird.

3. Feinverteilte, kationische, wässrige Polymerdispersion gemäß einem der Ansprüche 1 oder 2, wobei das kationische Präpolymer erhältlich ist durch die Polymerisation von
(a) 20 bis 25 Gew.-% mindestens eines Monomers, ausgewählt aus der Gruppe bestehend aus N,N-Dimethylaminopropylmethacrylamid, N,N-Dimethylaminoethylmethacrylat und N,N-Dimethylaminoethylacrylat,
(b) 50 bis 64,5 Gew.-% Styrol,
(c) 15 bis 25 Gew.-% mindestens eines C₄ Alkylacrylats,
(d) 0,5 bis 5 Gew.-% Acrylsäure und/oder Methacrylsäure,
wobei die Summe aus (a) + (b) + (c) + (d) 100 Gew.-% beträgt.

4. Feinverteilte, kationische, wässrige Polymerdispersion gemäß einem der Ansprüche 1 bis 3, wobei die Monomermischung in der zweiten Polymerisationsstufe umfasst
(i) 15 bis 30 Gew.-% Styrol,
(ii) 70 bis 85 Gew.-% mindestens eines Monomers ausgewählt aus der Gruppe bestehend aus n-Butylacrylat, tert-Butylacrylat oder Mischungen aus n-Butylacrylat und tert-Butylacrylat,
wobei die Summe von (i) + (ii) 100 Gew.-% beträgt.

5. Feinverteilte, kationische, wässrige Polymerdispersion gemäß einem der Ansprüche 1 bis 4, wobei die Lösungspolymerisation und die Emulsionspolymerisation in Abwesenheit eines Polymerisationsregulators durchgeführt werden.

6. Feinverteilte, kationische, wässrige Polymerdispersion gemäß einem der Ansprüche 1 bis 5, wobei die Komponente (a) des kationischen Präpolymers N,N-Dimethylaminopropylmethacrylamid ist.

7. Feinverteilte, kationische, wässrige Polymerdispersion gemäß einem der Ansprüche 1 bis 6, wobei die Komponente (c) n-Butylacrylat ist.

8. Methode zur Herstellung der feinverteilten, kationischen, wässrigen Polymerdispersionen gemäß einem der Ansprüche 1 bis 7 durch eine zweistufige Polymerisationsreaktion, **dadurch gekennzeichnet, dass** in einer ersten Stufe ein kationisches Präpolymer in Gegenwart von Polymerisationsinitiatoren hergestellt wird durch Polymerisation von
(a) 15 bis 30 Gew.-% mindestens eines ethylenisch ungesättigten Monomers, das eine Aminogruppe aufweist,
(b) 45 bis 75 Gew.-% mindestens eines gegebenenfalls substituierten Styrols,
(c) 5 bis 25 Gew.-% mindestens eines C₁ bis C₈ Alkyl(meth)acrylats,
(d) 0,5 bis 10 Gew.-% mindestens eines ethylenisch ungesättigten Monomers, das eine Säuregruppe umfasst, und
(e) 0 bis 20 Gew.-% mindestens eines nicht-ionischen, ethylenisch ungesättigten Monomers, das sich von (b) und (c) unterscheidet,
wobei die Summe von (a) + (b) + (c) + (d) + (e) 100 Gew.-% beträgt,
in einer Lösungspolymerisation in einem teilweise bis vollständig mit Wasser mischbaren Lösungsmittel,
Zugabe von Wasser zu dem so gebildeten Präpolymer zur Bildung einer wässrigen Lösung des Präpolymers,
und in einer zweiten Stufe die Durchführung einer Emulsionspolymerisation einer Monomermischung in der wässrigen Lösung des Präpolymers, wobei die Monomermischung umfasst,
(i) 0 bis 30 Gew.-% mindestens eines gegebenenfalls substituierten Styrols,
(ii) 50 bis 100 Gew.-% mindestens eines C₁ bis C₁₈ Alkyl(meth)acrylats,
(iii) 0 bis 30 Gew.-% mindestens eines Vinylesters einer linearen oder verzweigten C₁ bis C₃₀ Carbonsäure, und
(iv) 0 bis 30 Gew.-% mindestens eines nicht-ionischen ethylenisch ungesättigten Monomers, das sich von (i), (ii) und (iii) unterscheidet,
wobei die Summe von (i) + (ii) + (iii) + (iv) 100 Gew.-% beträgt,
und die Lösungspolymerisation und/oder Emulsionspolymerisation gegebenenfalls in Gegenwart von 0 bis 5 Gew.-% mindestens eines Polymerisationsregulators durchgeführt wird.

9. Verwendung der feinverteilten, kationischen, wässrigen Polymerdispersionen gemäß einem der Ansprüche 1 bis 7 als Leimungsmittel für Papier, Karton und Pappe.

## Revendications

1. Dispersion polymère aqueuse, cationique, finement divisée, ayant une taille de particule moyenne allant de 5 à 250 nm, qui peut être obtenue par polymérisation en émulsion de monomères éthyléniquement insaturés dans une solution aqueuse d'un prépolymère cationique en tant que dispersant, le prépolymère cationique étant préparé en présence d'initiateurs de polymérisation par polymérisation
(a) de 15 à 30 % en poids d'au moins un monomère éthyléniquement insaturé qui a un groupe amino,
(b) de 45 à 75 % en poids d'au moins un styrène éventuellement substitué,
(c) de 5 à 25 % en poids d'au moins un (méth)acrylate d'alkyle en C₁ à C₈,
(d) de 0,5 à 10 % en poids d'au moins un monomère éthyléniquement insaturé comprenant un groupe acide, et
(e) de 0 à 20 % en poids d'au moins un monomère éthyléniquement insaturé non ionique différent de (b) et (c),
la somme de (a) + (b) + (c) + (d) + (e) étant de 100 % en poids,
dans une polymérisation en solution dans un solvant partiellement à complètement miscible avec l'eau,
ajout d'eau au prépolymère ainsi formé afin de former une solution aqueuse du prépolymère, et ensuite réalisation d'une polymérisation en émulsion d'un mélange de monomères dans la solution aqueuse du prépolymère, le mélange de monomères comprenant :
(i) de 0 à 30 % en poids d'au moins un styrène éventuellement substitué,
(ii) de 50 à 100 % en poids d'au moins un (méth)acrylate d'alkyle en C₁ à C₁₈,
(iii) de 0 à 30 % en poids d'au moins un ester de vinyle d'un acide carboxylique linéaire ou ramifié en C₁ à C₃₀, et
(iv) de 0 à 30 % en poids d'au moins un monomère éthyléniquement insaturé non ionique différent de (i), (ii) et (iii),
la somme de (i) + (ii) + (iii) + (iv) étant de 100 % en poids,
et la polymérisation en solution et/ou la polymérisation en émulsion étant éventuellement réalisées en présence de 0 à 5 % en poids d'au moins un régulateur de polymérisation.

2. Dispersion polymère aqueuse, cationique, finement divisée selon la revendication 1, qui peut être obtenue par polymérisation en émulsion de monomères éthyléniquement insaturés dans une solution aqueuse d'un prépolymère cationique en tant que dispersant, le prépolymère cationique étant préparé en présence d'initiateurs de polymérisation par polymérisation
(a) de 15 à 30 % en poids d'au moins un monomère éthyléniquement insaturé qui a un groupe amino,
(b) de 45 à 70 % en poids d'au moins un styrène éventuellement substitué,
(c) de 5 à 25 % en poids d'au moins un (méth)acrylate d'alkyle en C₁ à C₄,
(d) de 0,5 à 10 % en poids d'au moins un monomère éthyléniquement insaturé comprenant un groupe acide, et
(e) de 0 à 20 % en poids d'au moins un monomère éthyléniquement insaturé non ionique différent de (b) et (c),
la somme de (a) + (b) + (c) + (d) + (e) étant de 100 % en poids,
dans une polymérisation en solution dans un solvant partiellement à complètement miscible avec l'eau,
ajout d'eau au prépolymère ainsi formé afin de former une solution aqueuse du prépolymère, et ensuite réalisation d'une polymérisation en émulsion d'un mélange de monomères dans la solution aqueuse du prépolymère, le mélange de monomères comprenant :
(i) de 0 à 30% en poids d'au moins un styrène éventuellement substitué,
(ii) de 50 à 100 % en poids d'au moins un (méth)acrylate d'alkyle en C₁ à C₁₈,
(iii) de 0 à 30 % en poids d'au moins un ester de vinyle d'un acide carboxylique linéaire ou ramifié en C₁ à C₃₀, et
(iv) de 0 à 30 % en poids d'au moins un monomère éthyléniquement insaturé non ionique différent de (i), (ii) et (iii),
la somme de (i) + (ii) + (iii) + (iv) étant de 100 % en poids,
et la polymérisation en solution et/ou la polymérisation en émulsion étant éventuellement réalisées en présence de 0 à 5 % en poids d'au moins un régulateur de polymérisation.

3. Dispersion polymère aqueuse, cationique, finement divisée selon la revendication 1 ou la revendication 2, le prépolymère cationique pouvant être obtenu par la polymérisation
(a) de 20 à 25 % en poids d'au moins un monomère sélectionné dans le groupe constitué par le N,N-diméthylaminopropylméthacrylamide, le méthacrylate de N,N-diméthylaminoéthyle et l'acrylate de N,N-diméthylaminoéthyle,
(b) de 50 à 64,5 % en poids de styrène,
(c) de 15 à 25 % en poids d'au moins un acrylate d'alkyle en C₄,
(d) de 0,5 à 5 % en poids d'acide acrylique et/ou d'acide méthacrylique,
la somme de (a) + (b) + (c) + (d) + (e) étant de 100 % en poids.

4. Dispersion polymère aqueuse, cationique, finement divisée selon l'une quelconque des revendications 1 à 3, dans la deuxième étape de polymérisation, le mélange de monomères comprenant :
(i) de 15 à 30% en poids de styrène,
(ii) de 70 à 85 % en poids d'au moins un monomère sélectionné dans le groupe constitué par l'acrylate de n-butyle, l'acrylate de tert-butyle ou des mélanges d'acrylate de n-butyle et d'acrylate de tert-butyle,
la somme de (i) + (ii) étant de 100 % en poids.

5. Dispersion polymère aqueuse, cationique, finement divisée selon l'une quelconque des revendications 1 à 4, dans laquelle la polymérisation en solution et la polymérisation en émulsion sont réalisées en l'absence de régulateur de polymérisation.

6. Dispersion polymère aqueuse, cationique, finement divisée selon l'une quelconque des revendications 1 à 5, dans laquelle le composant (a) du prépolymère cationique est le N,N- diméthylaminopropylméthacrylamide.

7. Dispersion polymère aqueuse, cationique, finement divisée selon l'une quelconque des revendications 1 à 6, dans laquelle le composant (c) est l'acrylate de n-butyle.

8. Procédé pour la préparation de la dispersion polymère aqueuse, cationique, finement divisée selon l'une quelconque des revendications 1 à 7 par une réaction de polymérisation à deux étapes, dans une première étape, un prépolymère cationique étant préparé en présence d'initiateurs de polymérisation par polymérisation
(a) de 15 à 30 % en poids d'au moins un monomère éthyléniquement insaturé qui a un groupe amino,
(b) de 45 à 75 % en poids d'au moins un styrène éventuellement substitué,
(c) de 5 à 25 % en poids d'au moins un (méth)acrylate d'alkyle en C₁ à C₈,
(d) de 0,5 à 10 % en poids d'au moins un monomère éthyléniquement insaturé comprenant un groupe acide, et
(e) de 0 à 20 % en poids d'au moins un monomère éthyléniquement insaturé non ionique différent de (b) et (c),
la somme de (a) + (b) + (c) + (d) + (e) étant de 100 % en poids,
dans une polymérisation en solution dans un solvant partiellement à complètement miscible avec l'eau,
ajout d'eau au prépolymère ainsi formé afin de former une solution aqueuse du prépolymère, et, dans une deuxième étape, une polymérisation en émulsion d'un mélange de monomères étant réalisée dans la solution aqueuse du prépolymère, le mélange de monomères comprenant :
(i) de 0 à 30 % en poids d'au moins un styrène éventuellement substitué,
(ii) de 50 à 100 % en poids d'au moins un (méth)acrylate d'alkyle en C₁ à C₁₈,
(iii) de 0 à 30 % en poids d'au moins un ester de vinyle d'un acide carboxylique linéaire ou ramifié en C₁ à C₃₀, et
(iv) de 0 à 30 % en poids d'au moins un monomère éthyléniquement insaturé non ionique différent de (i), (ii) et (iii),
la somme de (i) + (ii) + (iii) + (iv) étant de 100 % en poids,
et la polymérisation en solution et/ou la polymérisation en émulsion étant éventuellement réalisées en présence de 0 à 5 % en poids d'au moins un régulateur de polymérisation.

9. Utilisation des dispersions polymères aqueuses, cationiques, finement divisées, selon l'une quelconque des revendications 1 à 7 en tant qu'agents d'encollage pour papier, papier cartonné et carton.
